# EUROPEAN PATENT APPLICATION

(11) **EP 4 378 315 A1**
(43) Date of publication of application: **05.06.2024**
(21) Application number: 22210536.3
(22) Date of filing: 30.11.2022
(51) Int. Cl.: A22C 17/00, B23Q 17/00, B27B 13/00, F16P 3/00

(54) **FOOD-CUTTING APPARATUS**

(71) Applicant: Her Yen Enterprise Co., Ltd., Taichung City 434 (TW)
(72) Inventor: CHI, Chia-Cheng, 434 Taichung City (TW)
(74) Representative: Viering, Jentschura & Partner mbB Patent- und Rechtsanwälte

(57) **Abstract**

A food-cutting apparatus has a base (10); a trolley (20) for placing a food object (1); a cutting device (40) having two saw wheels (41), a power source (42), and a saw belt (43) that is wound around the two saw wheels (41) as a loop. The power source (42) drives the two saw wheels (41) to rotate and further drives the saw belt (43) to circle. The trolley (20) moves the food object (1) so that the food object (1) is cut by the saw belt (43). The saw belt (43) has teeth (431) oppositely at its two edges. The detector (50) monitors intactness of the teeth (431) and generates a warning signal when determining that any of the teeth (431) is worn. The controlling device (60) cuts off the power source (42) and slows down the trolley (20) when receiving the warning signal.

## Description

### BACKGROUND OF THE INVENTION

### 1. Field of the Invention:

The present invention relates to machinery for food processing, and more particularly to a food-cutting apparatus.

### 2. Description of the Related Art:

Bone-sawing machines are used in the food processing industry for cutting frozen meat and bones. A conventional food bone-sawing machine comprises a trolley, belt wheels, and saw belts. The saw belts are wound around the belt wheels so that when the belt wheels rotate, the saw belts are driven to move and cut frozen meat or bones placed on the trolley.

Since frozen meat and bones are usually very hard, the saw belt tends to get worn and become blunt over time. Once this happens, the saw belt is prevented from cutting sharply and may be pushed and depart from its original position by the counterforce from the frozen meat or bones it cuts. Such deflection of the saw belts can lead to uneven cuts on the frozen meat or bones and degrade food processing results.

However, until the saw belt is seriously damaged or even break, finding wear of saw belts with naked human eyes is quite difficult because the processing line usually operates at a high speed. It is thus very common that, in practice, saw belts in the early stage of wear and deflection are used to cut frozen meat or bones and undermine the quality of the processed food.

### SUMMARY OF THE INVENTION

To address the issues in the prior art, the present invention provides a food-cutting apparatus, which features an ability to effectively detect whether teeth on its saw belt have been worn and to stop or slow down its operation when detecting so, thereby enabling timely replacement of a new saw belt and ensuring good cutting performance.

In one embodiment, the present invention provides a food-cutting apparatus, which comprises: a base; a trolley, which is movably mounted on the base for a food object to place thereon; a cutting device, which is movably mounted on the base and has two saw wheels, a power source, and a saw belt, the two saw wheels being vertically separated with respect to the base, the saw belt being wound around the two saw wheels as a loop, the power source driving the two saw wheels to rotate and further driving the saw belt to circle, and the trolley driving the food object so that the food object is cut by the saw belt, wherein teeth are provided on the two opposite, lateral edges of the saw belt; a detector, which is located beside the saw belt and serves to monitor intactness of the teeth of the saw belt and generate a warning signal when determining that any of the teeth is worn; and a controlling device, which is coupled to the trolley, the power source of the cutting device, and the detector, and serves to cut off the power source and slow down movement of the trolley when receiving the warning signal generated by the detector.

In one embodiment, the present invention further has a plurality of guide blocks, arranged correspondingly beside the two saw wheels and the saw belt, so that when the two saw wheels rotate and the saw belt circles, the guide blocks remove residues of the food object from the two saw wheels and the saw belt.

In one embodiment, the present invention further has a plurality of blast guns, located correspondingly beside the saw belt and close to one of the saw wheels for spurting gas to blow off the residues of the food object from the saw belt.

With the foregoing configurations, the present invention can effectively monitor intactness of the teeth of the saw belt and timely stop or slow down movement of the trolly when determining that the saw belt is worn, so as to inform an operator to replace the saw belt. Thereby, the problem of the prior art about poor quality of food processing caused by incapability of automatically detecting wear of the saw belt can be effectively addressed.

Furthermore, with the single saw belt having teeth at its two opposite, lateral edges, the disclosed apparatus can effectively improve food processing efficiency.

In addition, with the guide blocks and the blast guns, the disclosed apparatus is capable of effectively removing food residues from the saw wheels and the saw belt, thereby keeping the apparatus clean.

### BRIEF DESCRIPTION OF THE DRAWINGS

**Fig. 1** is perspective view of a food-cutting apparatus in one embodiment of the present invention.
**Fig. 2** is a schematic side view of the food-cutting apparatus.
**Fig. 3** is a local, close-up view of Fig. 1.
**Fig. 4** is a partial, front view of the food-cutting apparatus, showing its saw belt straight.
**Fig. 5****,** similar to **Fig. 4****,** but shows the saw belt now deflective.
**Fig. 6** and **Fig. 7** are applied views of the food-cutting apparatus, showing the saw belt cutting food.
**Fig. 8** is a local, close-up view of **Fig. 7****,** showing guide blocks and blast guns removing food residues.
**Fig. 9** illustrates a part of the food-cutting apparatus according to another embodiment of the present invention, showing flanges raised from two sides of the saw wheel.

### DETAILED DESCRIPTION OF THE INVENTION

Some preferred embodiments as reflected in the accompanying drawings are described below to clearly exhibit the conception of the present invention. Instead of being depicted in scale, objects in the drawings may be exaggerated or somehow omitted for illustrative purposes.

It is also to be noted that, spatial descriptions, such as "above," "below," "front," "back," "inside," "outside," and "lateral" are indicated with respect to the orientation shown in the figures unless otherwise specified, and by no means form limitation to the present invention.

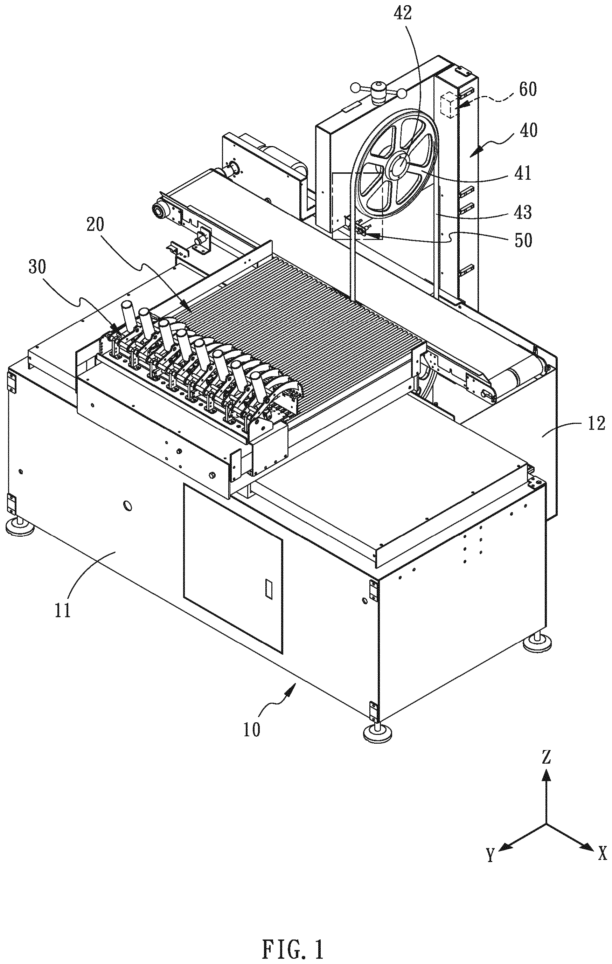

Referring to **Fig. 1** through **Fig. 9****,** the present invention provides a food-cutting apparatus, comprising a base **10,** a trolley **20,** a cutting device **40,** a detector **50,** a controlling device **60,** a plurality of guide blocks **70,** and a plurality of blast guns **80.**

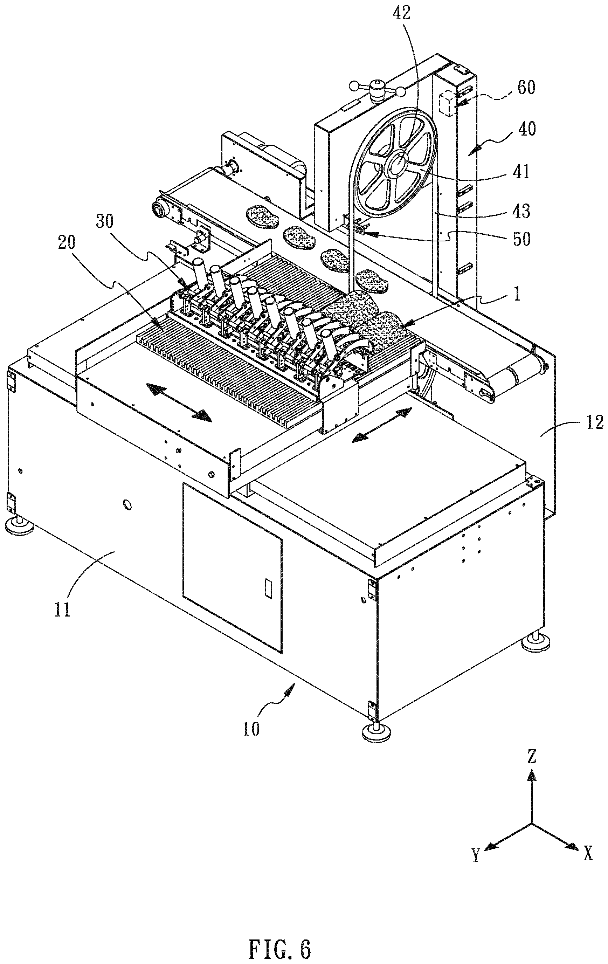

The base **10** is rectangular in shape and has a first installation area **11** and a second installation area **12,** as shown in **Fig. 1** and **Fig. 6****.**

The trolley **20** is movably installed in the first installation area **11** of the base **10** and is correspondingly located in the XY plane of the base **10.** The trolley **20** is for a food object **1** to place thereon. The trolley **20** is provided with a movable feeding device **30,** which is configured to push the food object **1.** The feeding device **30** pushes the food object 1 to move with respect to the Y axis of the base **10** while being carried by the trolley **20** to move with respect to the X axis of the base **10,** as shown in **Fig. 1****,** **Fig. 6****,** and **Fig. 7****.**

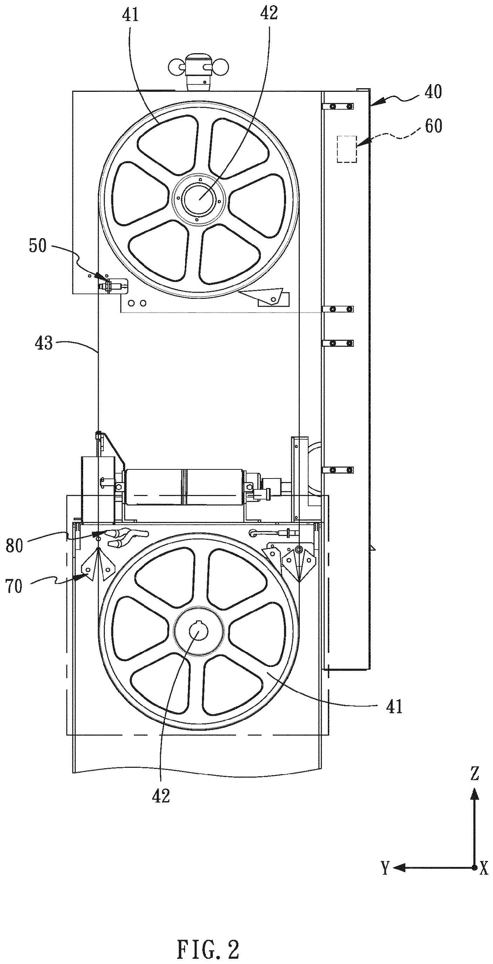

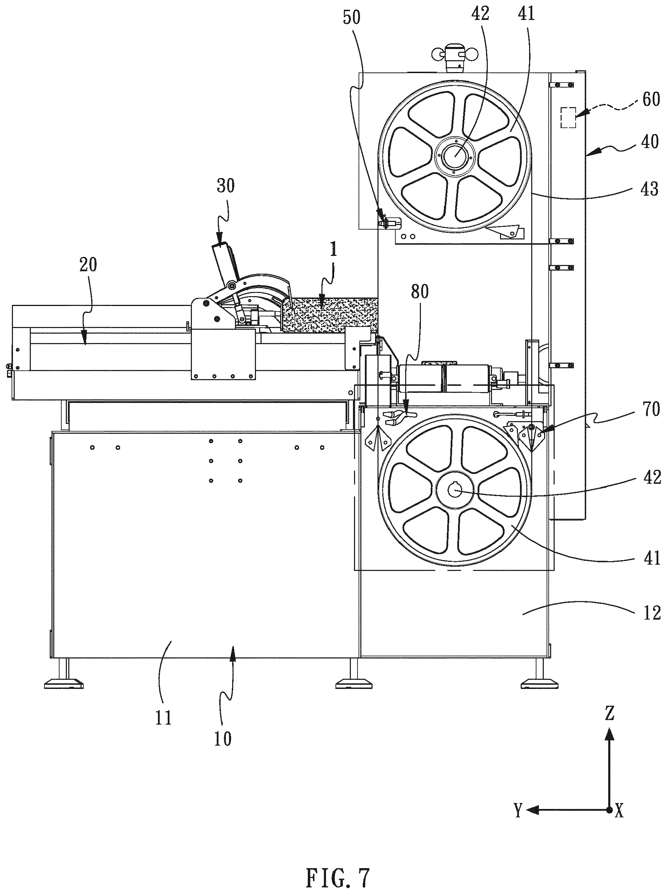

The cutting device **40** is installed in the second installation area **12** of the base **10** and has two saw wheels **41,** a power source **42,** and a saw belt **43.** The two saw wheels **41** are arranged in the direction of the Z axis of the base **10** that they are vertically separated (as shown in **Fig. 1** and **Fig. 2****).** The saw belt **43** is wound around the two saw wheels **41** as a loop. The power source **42** outputs power to drive the two saw wheels **41** to rotate, and the rotation of two saw wheels **41** further drives the saw belt **43** to circle. The feeding device **30** pushes the food object **1** toward the saw belt **43,** and the trolley **20** performs to-and-fro movement with respect to the X axis of the base **10.** Thereby, the saw belt **43** cuts the food object **1** (as shown in **Fig. 6** and **Fig. 7****).**

Referring to **Fig. 1****,** **Fig. 3****,** and **Fig. 9****,** teeth **431** are provided on the two opposite, lateral edges of the saw belt **43.** Both of the teeth **431** at the two edges of the saw belt **43** can cut the food object **1,** thereby effectively enhancing the cutting efficiency of the disclosed apparatus.

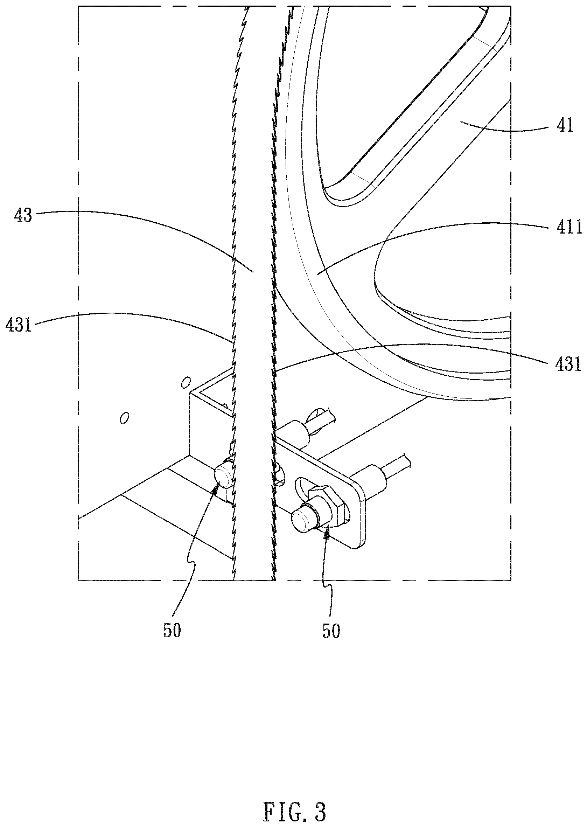

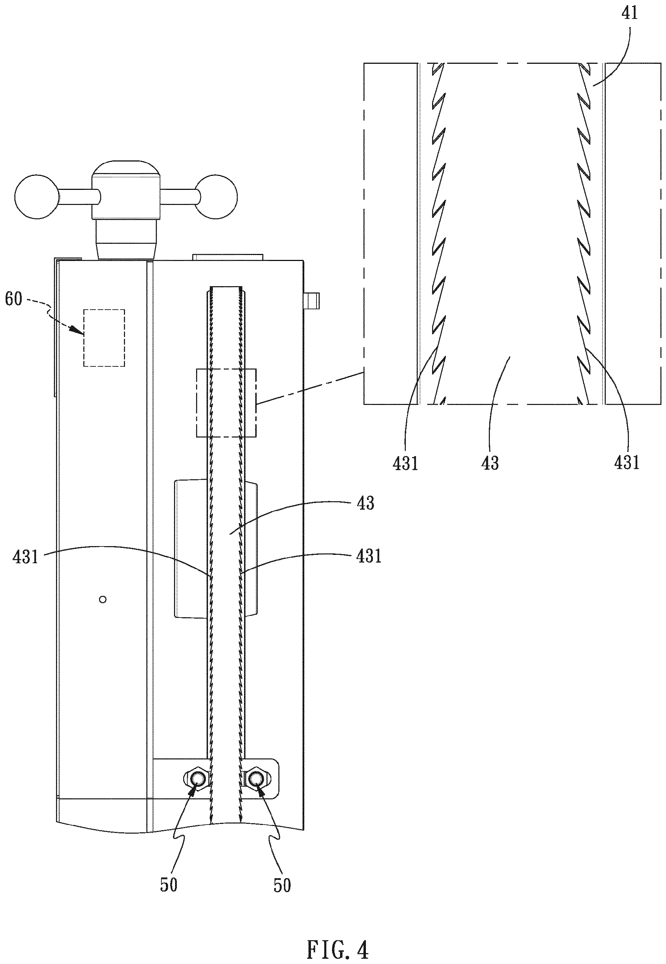

In the embodiment of the present invention, as shown in **Fig. 3** and **Fig. 4****,** each of the saw wheels **41** has chamfered parts **411** formed along its two rim edges, and the chamfered parts **411** form salients on the rim so as to hold the saw belt **43** in position and prevent the saw wheel **41** from wearing the teeth **431** of the saw belt **43.**

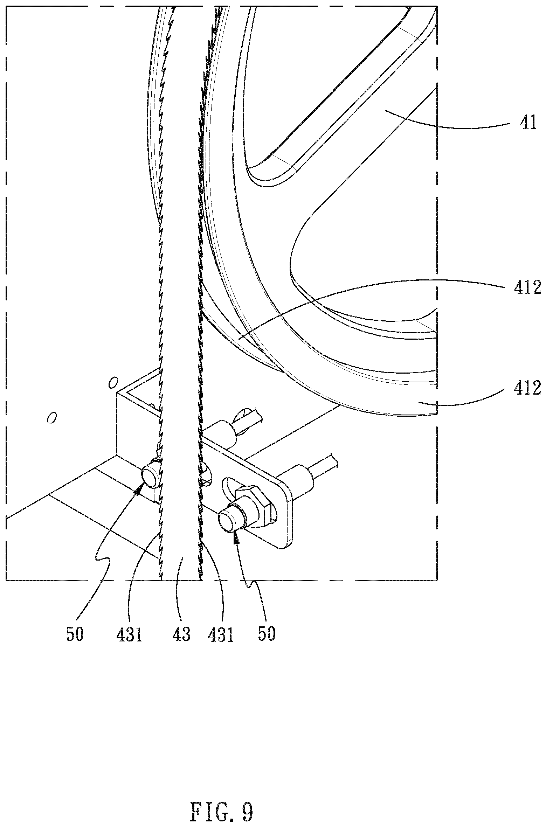

In another embodiment of the present invention, as shown in **Fig. 9****,** each of the saw wheels **41** has flanges **412** formed along its two rim edges. The saw belt **43** is positioned and retained between the two flanges **412** of each of the saw wheels **41.**

The detector **50** is located beside the saw belt **43.** In the embodiment of the present invention, there are two detectors **50** arranged separately to correspond to the teeth **431** on the two edge of the saw belt **43,** respectively, as shown in **Fig. 3** and **Fig. 4****.**

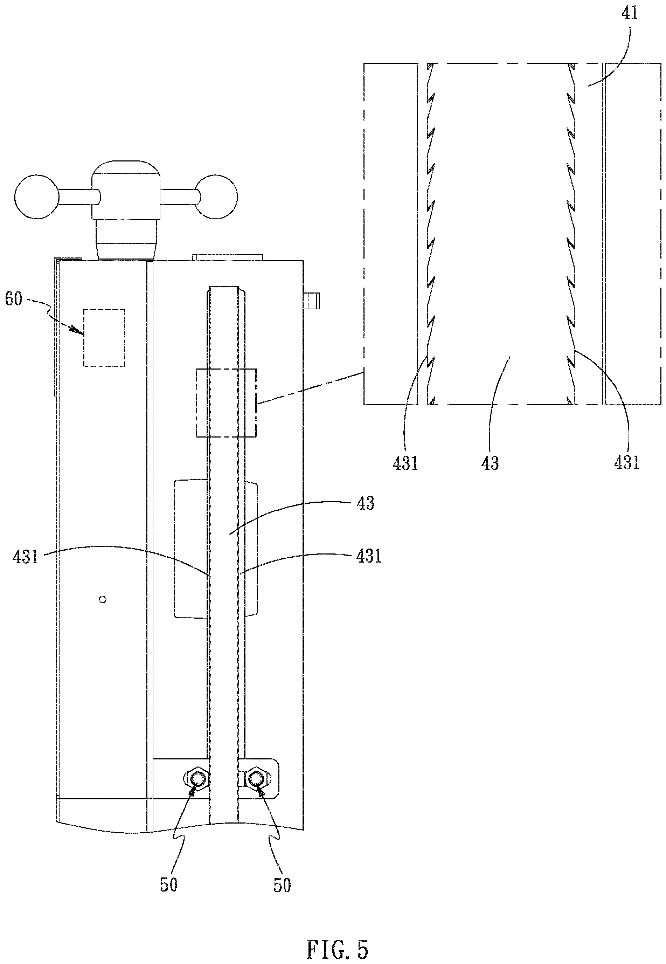

The detectors **50** serve to monitor intactness of the teeth **431** of the saw belt **43.** When the saw belt **43** is intact, it remains at the middle of the rim of each of the saw wheels **41,** as shown in **Fig. 4****.** When the saw belt **43** is worn and therefore becomes deflective, it moves toward either of the detectors **50.** Once the saw belt **43** enters the detection range of the detector **50** and is detected by the detector **50,** the detector **50** determines that the teeth **431** is worn and generates a warning signal, as shown in **Fig. 5****.** Therein, the detectors **50** may be non-contact sensors. In the embodiment of the present invention, the detectors **50** are proximity switches.

It is to be noted that in another embodiment of the present invention, when the detector **50** fails, the two flanges **412** of each of the two saw wheels **41** can protect the saw belt **43** as an additional insurance, thereby better protecting the saw belt **43.**

The controlling device **60** is coupled to the trolley **20,** the power source **42** of the cutting device **40,** and the detector **50.** The controlling device **60** is configured to receive the warning signal generated by the detector **50** and accordingly control the power source **42** and slow down the movement of the trolley **20.**

Specifically, when the controlling device **60** cuts off the power source **42** in response to the warning signal, the to-and-fro movement of the trolley **20** with respect to the X axis of the base **10** is decelerated. If the controlling device **60** does not receive the warning signal anymore after the deceleration of the trolley **20,** it means that the saw belt **43** is still usable. If the controlling device **60** remains receiving the warning signal after the deceleration of the trolley **20,** it means that the saw belt **43** has been worn seriously and needs to be replaced.

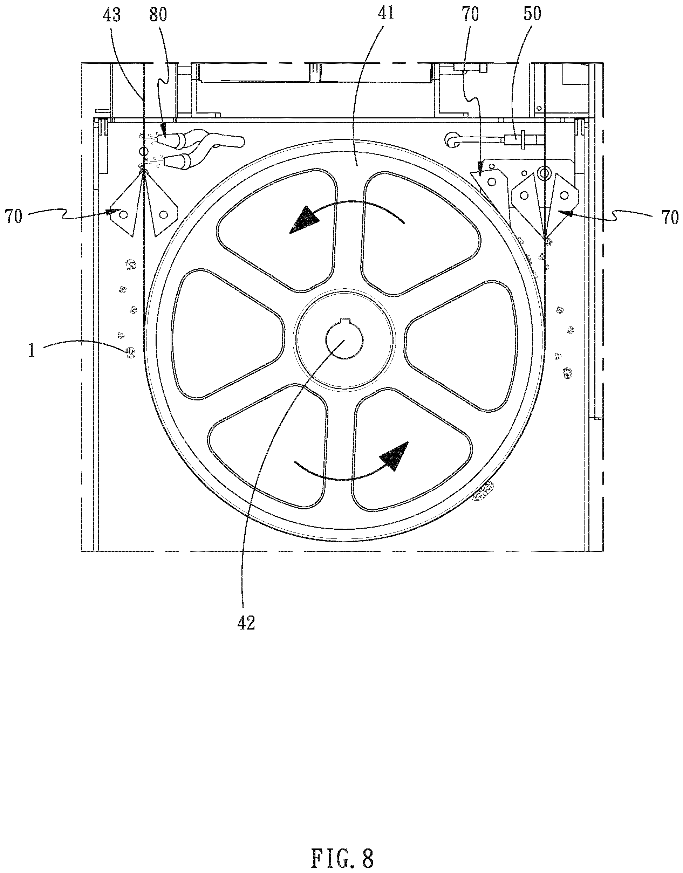

In another embodiment of the present invention, the detector **50** may be located at the inner side of the saw belt **43** (as shown in **Fig. 8****),** and the detector **50** may be capable of generating a warning signal when detecting any fracture on the saw belt **43,** so that the controlling device **60,** in response to the warning signal, can cut off the power source **42** for replacement of the saw belt **43** and resume the operation of the apparatus when an intact saw belt **43** is properly installed.

The plurality of guide blocks **70** are arranged correspondingly beside the two saw wheels **41** and the saw belt **43** for removing residue of the cut food object **1** from the two saw wheels **41** and the saw belt **43** as they are rotating. Therein, each of the guide blocks **70** is a triangular block or a trapezoid block and has a tip pointed to the saw wheel **41** or the saw belt **43,** as shown in **Fig. 2****,** **Fig. 7****,** and **Fig. 8****.**

The plurality of blast guns **80** are located correspondingly beside the saw belt **43** and close to one of the saw wheels **41.** In the embodiment of the present invention, there are two blast guns **80,** both at the same side of the lower saw wheel **41.** Therein, the blast guns **80** spurt gas to blow off residue of the cut food object **1** from the saw belt **43,** as shown in **Fig. 2****,** **Fig. 7****,** and **Fig. 8****.**

To sum up, the present invention has the following beneficial effects.

First, with the detector **50,** the disclosed apparatus is capable of monitoring intactness of the teeth **431** on the saw belt **43** and timely stopping or slowing down the movement of the trolley **20** when being aware that the saw belt **43** is worn, thereby enabling an operator to replace the saw belt **43** and maintaining the processing quality.

Furthermore, with the single saw belt **43** having teeth **431** at its two opposite, lateral edges, the disclosed apparatus is capable of cutting in two directions, thereby effectively improving food processing efficiency.

In addition, with the guide blocks **70** and the blast guns **80,** the disclosed apparatus is capable of effectively removing food residues from the saw wheels **41** and the saw belt **43,** thereby keeping the cutting device **40** clean.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A food-cutting apparatus for cutting a food object (1), the food-cutting apparatus being **characterized in**:
a base (10);
a trolley (20), which is movably mounted on the base (10) for the food object (1) to place thereon;
a cutting device (40), which is mounted on the base (10) and has two saw wheels (41), a power source (42), and a saw belt (43), the two saw wheels (41) being vertically separated with respect to the base (10), the saw belt (43) being wound around the two saw wheels (41) as a loop, the power source (42) driving the two saw wheels (41) to rotate and further driving the saw belt (43) to circle, and the trolley (20) driving the food object (1) so that the food object (1) is cut by the saw belt (43), wherein teeth (431) are provided on the two opposite, lateral edges of the saw belt (43);
a detector (50), which is located beside the saw belt (43) and serves to monitor intactness of the teeth (431) of the saw belt (43) and generate a warning signal when determining that any of the teeth (431) is worn; and
a controlling device (60), which is coupled to the trolley (20), the power source (42) of the cutting device (40), and the detector (50), and serves to cut off the power source (42) and slow down movement of the trolley (20) when receiving the warning signal generated by the detector (50).

2. The food-cutting apparatus of claim 1, being **characterized in** further comprising a plurality of guide blocks (70), arranged correspondingly beside the two saw wheels (41) and the saw belt (43), so that when the two saw wheels (41) rotate and the saw belt (43) circles, the guide blocks (70) remove residues of the food object (1) from the two saw wheels (41) and the saw belt (43).

3. The food-cutting apparatus of claim 2, being **characterized in that** each of the guide blocks (70) is roughly a triangular block or a trapezoid block that has a tip pointed toward the corresponding saw wheels (41) or the saw belt (43).

4. The food-cutting apparatus of claim 1, being **characterized in** further comprising a plurality of blast guns (80), located beside the saw belt (43) and close to one of the saw wheels (41) for spurting gas to blow off the residues of the food object (1) from the saw belt (43).

5. The food-cutting apparatus of claim 1, being **characterized in that** the detector (50) includes two detectors, arranged separately to correspond to the teeth (431) on the two edge of the saw belt (43), respectively.

6. The food-cutting apparatus of claim 5, being **characterized in that** the detectors (50) are non-contact sensors.

7. The food-cutting apparatus of claim 6, being **characterized in that** the detectors (50) are proximity switches.

8. The food-cutting apparatus of claim 1, being **characterized in that** each of the saw wheels (41) has chamfered parts (411) formed along its two rim edges and the saw belt (43) is positioned between the two chamfered parts (411) of each of the two saw wheels (41).

9. The food-cutting apparatus of claim 1, being **characterized in that** each of the saw wheels (41) has flanges (412) formed along its two rim edges, and the saw belt (43) is positioned between the two flanges (412) of each of the saw wheels (41).

10. The food-cutting apparatus of claim 1, being **characterized in that** a feeding device (30) is movably mounted on the trolley (20) and serves to push the food object (1) toward the saw belt (43).
